# EUROPEAN PATENT APPLICATION

(11) **EP 3 998 308 A1**
(43) Date of publication of application: **18.05.2022**
(21) Application number: 20840005.1
(22) Date of filing: 24.06.2020
(51) Int. Cl.: C08L 33/12, C08L 51/06

(54) **POLYACRYLATE POLYMER COMPOSITE MATERIAL AND PREPARATION METHOD THEREFOR**

(30) Priority: 12.07.2019 CN 201910629840
(71) Applicant: Kingfa Sci. & Tech. Co., Ltd., Guangzhou, Guangdong 510663 (CN)
(72) Inventor: DAI, Jianjian, Guangzhou, Guangdong 510663 (CN); YE, Nanbiao, Guangzhou, Guangdong 510663 (CN); HUANG, Xianbo, Guangzhou, Guangdong 510663 (CN); TANG, Lei, Guangzhou, Guangdong 510663 (CN); HUANG, Baokui, Guangzhou, Guangdong 510663 (CN); HE, Chaoxiong, Guangzhou, Guangdong 510663 (CN); FU, Jinfeng, Guangzhou, Guangdong 510663 (CN); YANG, Xiaoyun, Guangzhou, Guangdong 510663 (CN)
(74) Representative: dompatent von Kreisler Selting Werner - Partnerschaft von Patent- und Rechtsanwälten mbB
(86) International application number: PCT/CN2020/098134
(87) International publication number: WO 2021/008321

(57) **Abstract**

The present invention provides a polyacrylate polymer composite material, characterized by comprising the following components in parts by weight: 100 parts of a polyacrylate polymer, and 15 to 100 parts of toughening agents, wherein the toughening agent is selected from a compounding of a two-layer core-shell structure toughening agent and a three-layer core-shell structure toughening agent, and the two-layer core-shell structure toughening agent accounts for 10% to 45% of a total weight of the toughening agents. The polyacrylate polymer composite material has advantages of high transparency and high toughening efficiency, without fracture or folding-induced whitening marks when it is prepared into a film and repeatedly folded in half.

## Description

### TECHNICAL FIELD

The present invention relates to the technical field of polymer materials, and particularly relates to a polyacrylate polymer composite material and a preparation method thereof.

### BACKGROUND

In recent years, PVC decorative materials have been widely used in interior architectural decoration to replace traditional ceramics, paints, and wooden decorations. PVC decorative materials are mainly made into films with various patterns, glued to surfaces of walls, furniture, etc., to play a decorative and aesthetic effect. However, when it is used indoors for a long time, it will appear discoloration in places irradiated by sunlight, such as places near windows, balconies, and doorways, and the surface is easily scratched, affecting an appearance. In the outdoor walls, garden landscapes, etc., the PVC decorative film also has a very large application demand. However, PVC has a very poor weather resistance per se and is very easy to discolor when used outdoors, thereby limiting its application. An ultraviolet blocking PMMA material is selected to make into a film, and adhered to the PVC decorative film to make a composite film. Because ultraviolet rays in the sunlight are partially blocked by the PMMA film, the PVC decorative film will not be discolored resulted from exposure to the ultraviolet rays, thereby greatly improving its outdoor service life.

A polyacrylate polymer has advantages of high transparency and high hardness. Especially polymethyl methacrylate (PMMA) has high transparency, high gloss, high surface hardness and excellent weather resistance, which is widely used in light guide plates, lampshade shells, architectural plexiglass, sanitary ware, automobiles, etc. A large number of literature reports that PMMA is a polymer with excellent light stability, which is very suitable for outdoor occasions with extremely high weather resistance requirements. However, PMMA is a brittle material with great rigidity, when it is processed into a film, it is prone to fracture, which cannot meet processing and use requirements at all. Therefore, PMMA must be toughened.

A patent 200680048017.8 discloses a PMMA film with particularly high weather resistance and relatively high ultraviolet protection. An impact modifier with a two-layer or three-layer core-shell structure is used, and preferably the impact modifier with the two-layer core-shell structure is used. However, although the impact modifier with the two-layer core-shell structure has good toughness and transparency, it is easy to cause folding-induced whitening when folded in half. To solve the folding-induced whitening, a particle size of the toughening agent must be reduced, but a toughening efficiency will be reduced, which is difficult to ensure that performance requirements for processing into a film are met.

A Chinese patent 201310155826.0 discloses a PMMA toughening agent, wherein the toughening agent is mainly composed of a MAAS rubber and a core-shell structure polymer (a latex particle made from a seed emulsion butyl acrylate and a mixture of ethylene glycol dimethacrylate and allyl methacrylate as a crosslinking agent). However, an anti-folding-induced whitening effect of the toughening agent is not satisfactory.

### SUMMARY

An objective of the present invention is to provide a polyacrylate polymer composite material, which has the advantages of high transparency, high toughening efficiency, no fracture or folding-induced whitening marks when prepared into a film and repeatedly folded in half.

Another objective of the present invention is to provide a preparation method of the above-mentioned polyacrylate polymer composite material.

The present invention is realized through the following technical solutions.

A polyacrylate polymer composite material, in parts by weight, includes the following components:
100 parts of a polyacrylate polymer; and
15 to 100 parts of toughening agents;
the toughening agent is selected from a compounding of a two-layer core-shell structure toughening agent and a three-layer core-shell structure toughening agent, and the two-layer core-shell structure toughening agent accounts for 10% to 45% of a total weight of the toughening agents.

It is found in the present invention through experiments that the toughening performance and the anti-folding-induced whitening performance are contradictory to each other. For a certain toughening agent with a large particle size and a high toughening efficiency, when it is folded in half, it will cause more crazes or holes, and the folding-induced whitening will be more obvious. In order to reduce the folding-induced whitening, the particle size needs to be reduced, but the toughening efficiency will be decreased. Therefore, in order to obtain a toughening agent with a good toughening effect, high transparency and good anti-folding-induced whitening effect, the present invention has made an exploration. A two-layer core-shell structure toughening agent provides an excellent toughening effect and good transparency, but it is easy to cause the folding-induced whitening. In order to improve the folding-induced whitening defect, it is necessary to reduce the particle size, but this will lead to a decrease in the toughening efficiency. In the present invention, it is found that compared to the two-layer core-shell structure toughening agent, hollowing of rubber in a middle rubber layer of a three-layer core-shell structure toughening agent needs higher energy, so it is more difficult to generate the folding-induced whitening. Compounding the three-layer core-shell structure toughening agent can improve the toughening efficiency, but a transparency of the three-layer core-shell structure toughening agent is slightly worse, adding too much will have a greater impact on the transparency of the overall material. Advantages of excellent transparency, no fracture or folding-induced whitening marks when prepared into a film and repeatedly folded in half can be obtained by adjusting an amount ratio of the two toughening agents.

A shell layer of the two-layer core-shell structure toughening agent is polymethyl methacrylate, and a core layer of the two-layer core-shell structure toughening agent is a cross-linked butyl acrylate and styrene copolymer; an outer layer of the three-layer core-shell structure toughening agent is polymethyl methacrylate, a middle rubber layer of the three-layer core-shell structure toughening agent is a cross-linked butyl acrylate and styrene copolymer, and an inner layer of the three-layer core-shell structure toughening agent is polymethyl methacrylate.

Generally, the shell layer of the two-layer core-shell structure toughening agent is polyacrylates such as styrene-acrylonitrile-methyl methacrylate copolymer, styrene-acrylonitrile copolymer, styrene-methyl methacrylate copolymer, etc. The core layer of the two-layer core-shell structure toughening is polybutyl acrylate, styrene-butadiene copolymer, and silicone rubber, etc.

Generally, the outer layer of the three-layer core-shell structure toughening agent is polyacrylates such as styrene-acrylonitrile-methyl methacrylate copolymer, styrene-acrylonitrile copolymer, styrene-methyl methacrylate copolymer, etc., the middle rubber layer of the three-layer core-shell structure toughening agent is polybutyl acrylate, styrene-butadiene copolymer, and silicone rubber, etc., the inner layer of the three-layer core-shell structure toughening agent is polyacrylate, styrene-acrylonitrile-methyl methacrylate copolymer, styrene-acrylonitrile copolymer, and styrene-methyl methacrylate copolymer, etc.

Preferably, in the two-layer core-shell structure toughening agent, the shell layer accounts for 45% to 70% of a total weight of the two-layer core-shell structure toughening agent.

Preferably, in the three-layer core-shell structure toughening agent, the middle rubber layer accounts for 25% to 45% of a total weight of the three-layer core-shell structure toughening agent.

The above-mentioned preferred layer ratio is to improve a compatibility of the core-shell toughening agent in the polyacrylate polymer matrix, and to reduce the folding-induced whitening caused by cavitation of tiny voids resulted from a displacement of the toughening agent and the resin matrix after bending.

In order to obtain a balance between the toughening efficiency, the transparency, and the anti-folding-induced whitening performance, preferably, the two-layer core-shell structure toughening agent accounts for 20% to 35% of the total weight of the toughening agents.

Under a design of a microscopic composition of the three-layer core-shell structure toughening agent and the two-layer core-shell structure toughening agent, preferably, a refractive index difference between the toughening agent and the polyacrylate polymer is less than 0.010. In the polyacrylate polymer composite material, the toughening agent has an island-like distribution in the resin matrix, and there is a connected transition surface directly between the toughening agent and the matrix. If refractive indexes of the two substances differ greatly, a light transmittance will be low. Therefore, the smaller the difference in the refractive indexes of the toughening agent and the resin matrix, the higher the transparency. When the polyacrylate polymer is PMMA, the refractive index is generally about 1.49, and the refractive index of the toughening agent used at this time should be close to this value. For the two-layer core-shell toughening agent, it is mainly the polybutyl acrylate rubber core layer that needs to adjust the refractive index to be consistent with that of the polymethyl methacrylate shell layer, which is 1.49.

The polyacrylate polymer is selected from at least one of polymethyl acrylate polymers, polyethyl acrylate polymers, polypropyl acrylate polymers, polybutyl acrylate polymers, and polypentyl acrylate polymers.

The polyacrylate polymer is mainly obtained by a free radical polymerization of acrylate compound monomers. Among them, it may be a copolymerization of multiple acrylate compound monomers. For polymethyl methacrylate (PMMA), it can be a free radical homopolymerization of pure methyl methacrylate, or a free radical copolymerization of a mixture of methyl methacrylate and other acrylate compounds. The other acrylic compounds can be methyl acrylate, ethyl methacrylate, propyl methacrylate, n-butyl methacrylate, t-butyl methacrylate, isobutyl methacrylate, pentyl methacrylate, 2-ethylhexyl methacrylate and the like.

In the present invention, a weather-resistant agent such as an anti-ultraviolet agent can be added to prepare into an anti-ultraviolet film with high transparency and high flexibility, which, in parts by weight, further includes 0.3 to 10 parts of the weather-resistant agent; the weather-resistant agent is selected from at least one of a benzotriazole ultraviolet absorbent, a dibenzoic acid ultraviolet absorbent, and a HALS compound. The ultraviolet absorbent used has an excellent thermal stability.

The benzotriazole ultraviolet absorbent can be selected from at least one of 2-(2'-hydroxy-5'-methyl)-benzotriazole, 2-(3',5'-di-tert-butyl-2'-hydroxy)-benzotriazole, 2-(2'-hydroxy-3'-isobutyl-5'-tert-butyl)-benzotriazole, 2-(2'-hydroxy-3',5'-bis(1,1-dimethylphenyl)-benzotriazole, 2-(2'-hydroxy-5'-tert-octyl)-benzotriazole, 2-(2'-hydroxy-3'-(1,1-dimethylphenyl)-5'-[1,1,3,3-tetramethylbutyl]-benzotriazole, and 2,2'methylene-(6-(2H-benzotriazole)-4-tert-octyl)phenol.

The HALS compound is selected from at least one of bis 2,2,6,6-tetramethylpiperidol sebacate, N,N'-(2,2,6,6-tetramethyl, 4-aminopiperidine)-isophthalamide, bis-1-octyloxy-2,2,6,6-tetramethylpiperidinol sebacate, and (1,2,2,6,6-pentamethylpiperidol) methacrylate.

According to processing performance, flame retardancy, aesthetics, etc., 0.2 to 5 parts of an auxiliary agent can further be included, the auxiliary agent is selected from at least one of a heat stabilizer, an antioxidant, an anti-dripping agent, a lubricant, and a plasticizer.

The lubricant is a stearic acid metallic salt lubricant, an alkyl stearate lubricant, a pentaerythritol stearate lubricant, a paraffin wax or a montan wax.

The anti-dripping agent is selected from at least one of polytetrafluoroethylene, silicone-coated polytetrafluoroethylene, and methacrylate polymer-coated polytetrafluoroethylene.

The heat stabilizer is an organophosphite, preferably triphenyl phosphite, tris-(2,6-dimethylphenyl)phosphite, tris-nonyl phenyl phosphite, dimethyl phenylphosphonate or trimethyl phosphate.

The antioxidant is an organophosphite, an alkylated monohydric phenol or polyhydric phenol, an alkylation reaction product of a polyhydric phenol and a diene, a butylation reaction product of p-cresol or dicyclopentadiene, an alkylated hydroquinone, a hydroxylated thiodiphenyl ether, an alkylidene-bisphenol, a benzyl compound or a polyol ester antioxidant.

The plasticizer is phthalate.

A preparation method of the polyacrylate polymer composite material includes the following steps: weighing each component according to a ratio, putting the polyacrylate polymer, the toughening agent, and the weather-resistant agent into a high-speed mixer to mix evenly, and then extruding and granulating through an extruder (where a screw speed is 300 to 500 rpm, and a temperature of each section of the extruder from a feeding port to a head is set to 80°C to 100°C in zone one, 160°C to 180°C in zone two, 190°C to 210°C in zone three, 190°C to 210°C in zone four, 190°C to 210°C in zone five, 180°C to 200°C in zone six, 180°C to 200°C in zone seven, 190°C to 210°C in zone eight, 190°C to 210°C in zone nine, and 200°C to 220°C in the head), to obtain the polyacrylate polymer composite material.

A particle size of the toughening agent is 50 nm to 250nm.

Preferably, the particle size of the toughening agent is 130 nm to 170 nm. Observed by a scanning electron microscope, the toughening agent has an island-like distribution in the resin matrix, the particle size distribution of the toughening agent is normally distributed, a peak of the particle size distribution of the toughening agent is within the above particle size range, a transparency and anti-folding-induced whitening performance of the composite material is satisfactory, and a toughening efficiency can also be maintained at a high level.

An application of the above-mentioned polyacrylate polymer composite material is used for an ultraviolet blocking film or coating.

The present invention has the following beneficial effects.

In the present invention, a specific two-layer core-shell structure toughening agent and a specific three-layer core-shell structure toughening agent are selected for compounding, to further reduce the refractive index difference between the toughening agent and the resin matrix, and by adjusting a dosage ratio of the two toughening agents, it can be obtained advantages of high transparency, and no fracture or folding-induced whitening marks when prepared into a film and repeatedly folded in half, the polyacrylate polymer composite material has a good transparency, good anti-folding-induced whitening effect, and good toughening effect. It can be prepared as a film with a high light transmittance, good toughness, without folding-induced whitening when repeatedly folded in half, which has a wide range of applications.

### DETAILED DESCRIPTION

The present invention is further illustrated by the following embodiments, but the present invention is not limited by the following embodiments.

Raw materials used in the present invention are all derived from commercially available products.

PMMA: a weight-average molecular weight is 130,000 g/mol, and a refractive index is 1.49.

Two-layer core-shell structure toughening agent A: a shell layer is polymethyl methacrylate, a core layer is a cross-linked butyl acrylate and styrene copolymer, and the shell layer accounts for 61% of a total weight of the two-layer core-shell structure toughening agent, a refractive index is 1.495, and a particle size distribution is between 50 nm to 200 nm.

Two-layer core-shell structure toughening agent B: a shell layer is polymethyl methacrylate, a core layer is a cross-linked butyl acrylate and styrene copolymer, and the shell layer accounts for 75% of a total weight of the two-layer core-shell structure toughening agent, a refractive index is 1.480, and a particle size distribution is between 50 nm to 200 nm.

Two-layer core-shell structure toughening agent C: a shell layer is polymethyl methacrylate, a core layer is styrene-butadiene copolymer, and the shell layer accounts for 61% of a total weight of the two-layer core-shell structure toughening agent, a refractive index is 1.931, and a particle size distribution is between 50 nm to 200 nm.

Three-layer core-shell structure toughening agent A: an outer layer is polymethyl methacrylate, a middle rubber layer is cross-linked butyl acrylate and styrene copolymer, an inner layer is polymethyl methacrylate, the middle rubber layer accounts for 41% of a total weight of the three-layer core-shell structure toughening agent, a refractive index is 1.488, and a particle size distribution is between 50 nm to 200 nm.

Three-layer core-shell structure toughening agent B: an outer layer is polymethyl methacrylate, a middle rubber layer is cross-linked butyl acrylate and styrene copolymer, an inner layer is polymethyl methacrylate, the middle rubber layer accounts for 20% of a total weight of the three-layer core-shell structure toughening agent, a refractive index is 1.479, and a particle size distribution is between 50 nm to 200 nm.

Three-layer core-shell structure toughening agent C: an outer layer is polymethyl methacrylate, a middle rubber layer is silicone rubber, an inner layer is polymethyl methacrylate, and the middle rubber layer accounts for 41% of a total weight of the three-layer core-shell structure toughening agent, a refractive index is 1.508, and a particle size distribution is between 50 nm to 200 nm.

Antioxidant: a compound of tetrakis[β-(3,5-di-tert-butyl-4-hydroxyphenyl)propionic acid]pentaerythritol ester and tris[2.4-di-tert-butylphenyl]phosphite.

Lubricant: N,N'-ethylenebis(stearamide).

Weather-resistant agent: TINUVIN 770DF, HALS compound, bis-2,2,6,6-tetramethylpiperidinol sebacate.

A preparation method of a polyacrylate polymer composite material of embodiments and comparative embodiments: weighing each component according to a ratio, putting a polyacrylate polymer, a toughening agent, and a weather-resistant agent into a high-speed mixer to mix evenly, and then extruding and granulating through an extruder (where a screw speed is 300 to 500 rpm, and a temperature of each section of the extruder from a feeding port to a head is set to 80°C to 100°C in zone one, 160°C to 180°C in zone two, 190°C to 210°C in zone three, 190°C to 210°C in zone four, 190°C to 210°C in zone five, 180°C to 200°C in zone six, 180°C to 200°C in zone seven, 190°C to 210°C in zone eight, 190°C to 210°C in zone nine, and 200°C to 220°C in the head), to obtain the polyacrylate polymer composite material.

### Various performance test methods

(1) Transparency: a 60 µm-thick film is made and tested with a transmittance test instrument.
(2) Izod notched impact strength: it is tested according to a standard GB1843-1996 Plastics-Determination of izod impact strength, a pendulum energy is 2.75J, and the test is performed at a room temperature.
(3) Anti-folding-induced whitening: a 60 µm-thick film is made, and the film is folded in half and a whitening situation is observed against the light. Severity levels are divided into as: none, mild, obvious, and severe.

**Table 1: Ratio (parts by weight) of each component in embodiments and each performance test results**

| | Embo dime nt 1 | Emb odim ent 2 | Embo dime nt 3 | Embo dime nt 4 | Embo dime nt 5 | Emb odim ent 6 | Emb odim ent 7 | Embo dimen t 8 |
|---|---|---|---|---|---|---|---|---|
| PMMA | 100 | 100 | 100 | 100 | 100 | 100 | 100 | 100 |
| Two-layer core-shell structure toughening agent A | 3 | 6 | 12 | 20 | 3 | 10.5 | 13.5 | - |
| Two-layer core-shell structure toughening agent B | - | - | - | - | - | - | - | 6 |
| Three-layer core-shell structure toughening agent A | 12 | 24 | 48 | 80 | 27 | 19.5 | 16.5 | - |
| Three-layer core-shell structure toughening agent B | - | - | - | - | - | - | - | 24 |
| Weather-resistant agent | 0.3 | 0.3 | 0.3 | 0.3 | 0.3 | 0.3 | 0.3 | 0.3 |
| Antioxidant | 0.4 | 0.4 | 0.4 | 0.4 | 0.4 | 0.4 | 0.4 | 0.4 |
| Lubricant | 0.3 | 0.3 | 0.3 | 0.3 | 0.3 | 0.3 | 0.3 | 0.3 |
| Transparency | 89 | 87 | 84 | 82 | 87 | 86 | 87 | 82 |
| Notched impact strength, kJ/m² | 2.5 | 3.5 | 4.6 | 5.4 | 2.9 | 3.8 | 4.2 | 3.1 |
| Anti-folding-induced whitening | none | none | none | slight | none | none | slight | none |

**Table 2: Ratio (parts by weight) of each component in comparative examples and each performance test results**

| | Comparative Example 1 | Comparative Example 2 | Comparative Example 3 | Comparative Example 4 |
|---|---|---|---|---|
| PMMA | 100 | 100 | 100 | 100 |
| Two-layer core-shell structure toughening agent A | - | 30 | 36 | 1 |
| Two-layer core-shell structure toughening agent B | - | - | - | - |
| Two-layer core-shell structure toughening agent C | 15 | - | - | - |
| Three-layer core-shell structure toughening agent A | - | - | 4 | 29 |
| Three-layer core-shell structure toughening agent B | - | - | - | - |
| Three-layer core-shell structure toughening agent C | 15 | - | - | - |
| Weather-resistant agent | 0.3 | 0.3 | 0.3 | 0.3 |
| Antioxidant | 0.4 | 0.4 | 0.4 | 0.4 |
| Lubricant | 0.3 | 0.3 | 0.3 | 0.3 |
| Transparency | 41 | 90 | 89 | 84 |
| Notched impact strength, kJ/m² | 7.3 | 4.4 | 4.8 | 1.8 |
| Anti-folding-induced whitening | serious | obvious | serious | none |

It can be seen from Embodiments 1 to 4 that under a compounding condition of toughening agents of the present invention, with an increase in an amount of the toughening agent, mechanical performance increases, and a decrease in transparency and anti-folding-induced whitening performance can be slowed down.

It can be seen from Embodiment 2 or 5 or 6 or 7 that under the condition of the same amount of toughening agent, a compounding ratio of the double-layer core-shell structure toughening agent and the three-layer core-shell structure toughening agent is very important. Under a preferred compounding ratio, an overall performance of mechanical performance, transparency, and anti-folding-induced whitening is better, which is more conducive to popularization and application.

It can be seen from Embodiment 2 or 8 that a structure ratio of a secondarily selected two-layer and three-layer core-shell structure toughening agent can seriously affect the transparency.

It can be seen from Comparative Example 1 that not all the compounding of the two-layer and three-layer core-shell structure toughening agents can achieve excellent transparency, mechanical performance, and anti-folding-induced whitening performance.

It can be seen from Comparative Embodiments 2 to 4 that only adding two-layer core-shell structure toughening agent, or an addition ratio of the two-layer core-shell structure toughening agent being too large will cause a decrease in the transparency and a deterioration of the anti-folding-induced whitening performance. In particular, it can be seen from Comparative Example 4 that when the addition ratio of the two-layer core-shell structure toughening agent is too small, although the transparency (in fact, it is even lower than that of an example with 30 parts of the toughening agent in an embodiment) and the anti-folding-induced whitening performance can meet the demands, the mechanical performance is very poor.

## Claims

1. A polyacrylate polymer composite material, in parts by weight, comprising the following components:
100 parts of a polyacrylate polymer; and
15 to 100 parts of toughening agents;
the toughening agent is selected from a compounding of a two-layer core-shell structure toughening agent and a three-layer core-shell structure toughening agent, and the two-layer core-shell structure toughening agent accounts for 10% to 45% of a total weight of the toughening agents.

2. The polyacrylate polymer composite material according to claim 1, wherein a shell layer of the two-layer core-shell structure toughening agent is polymethyl methacrylate, and a core layer of the two-layer core-shell structure toughening agent is a cross-linked butyl acrylate and styrene copolymer; an outer layer of the three-layer core-shell structure toughening agent is polymethyl methacrylate, a middle rubber layer of the three-layer core-shell structure toughening agent is a cross-linked butyl acrylate and styrene copolymer, and an inner layer of the three-layer core-shell structure toughening agent is polymethyl methacrylate.

3. The polyacrylate polymer composite material according to claim 2, wherein in the two-layer core-shell structure toughening agent, the shell layer accounts for 45% to 70% of a total weight of the two-layer core-shell structure toughening agent.

4. The polyacrylate polymer composite material according to claim 2, wherein in the three-layer core-shell structure toughening agent, the middle rubber layer accounts for 25% to 45% of a total weight of the three-layer core-shell structure toughening agent.

5. The polyacrylate polymer composite material according to any one of claims 1 to 4, wherein the two-layer core-shell structure toughening agent accounts for 20% to 35% of the total weight of the toughening agents.

6. The polyacrylate polymer composite material according to claim 1, wherein the polyacrylate polymer is selected from at least one of polymethyl acrylate polymers, polyethyl acrylate polymers, polypropyl acrylate polymers, polybutyl acrylate polymers, and polypentyl acrylate polymers.

7. The polyacrylate polymer composite material according to claim 1 or 3 or 4, wherein a refractive index difference between the toughening agent and the polyacrylate polymer is less than 0.010.

8. The polyacrylate polymer composite material according to claim 1, wherein in parts by weight, the polyacrylate polymer composite material further comprises 0.3 to 10 parts of a weather-resistant agent; the weather-resistant agent is selected from at least one of a benzotriazole ultraviolet absorbent, a dibenzoic acid ultraviolet absorbent, and a HALS compound; the polyacrylate polymer composite material further comprises 0.2 to 5 parts of an auxiliary agent, and the auxiliary agent is selected from at least one of a heat stabilizer, an antioxidant, an anti-dripping agent, a lubricant, and a plasticizer.

9. A preparation method of the polyacrylate polymer composite material according to claim 8, comprising the following steps: weighing each component according to a ratio, putting the polyacrylate polymer, the toughening agent, and the weather-resistant agent into a high-speed mixer to mix evenly, and then extruding and granulating through an extruder (where a screw speed is 300 to 500 rpm, and a temperature of each section of the extruder from a feeding port to a head is set to 80°C to 100°C in zone one, 160°C to 180°C in zone two, 190°C to 210°C in zone three, 190°C to 210°C in zone four, 190°C to 210°C in zone five, 180°C to 200°C in zone six, 180°C to 200°C in zone seven, 190°C to 210°C in zone eight, 190°C to 210°C in zone nine, and 200°C to 220°C in the head), to obtain the polyacrylate polymer composite material.

10. The preparation method of the polyacrylate polymer composite material according to claim 9, wherein a particle size of the toughening agent is 50 nm to 250 nm; preferably, the particle size of the toughening agent is 130 nm to 170 nm.
